# EUROPEAN PATENT APPLICATION

(11) **EP 1 428 744 A1**
(43) Date of publication of application: **16.06.2004**
(21) Application number: 03257328.9
(22) Date of filing: 19.11.2003
(51) Int. Cl.: B62D 29/00

(54) **A method and apparatus for structurally reinforcing a member by insertion of the reinforcement**

(30) Priority: 13.12.2002 US 318494
(71) Applicant: Henkel KGaA, 40589 Düsseldorf (DE)
(72) Inventor: Wycech, Joseph S., Grosse Pointe Shores, Michigan 48236 (US)
(74) Representative: W.P. Thompson & Co.

(57) **Abstract**

An assembly 10 and a method 200 which utilizes the assembly 10 to selectively and structurally strengthen and rigidize and/or stiffen a member 150 which is operatively disposed within an article of manufacture, such as an without limitation, a vehicle. Particularly, the assembly 10 includes a selectively expandable portion 18 which is stretched along an inflation wand 12 and is then inserted into the member 150 via a relatively small aperture 155 formed within the member 150. Selectively expandable portion 18 is then inflated with a material 52 to support the member 150.

## Description

### Field of the Invention

The present invention generally relates to a method and apparatus for structurally reinforcing a member and more particularly, to a method and apparatus for inserting an inflatable support member through a relatively small aperture into a space and which may be selectively expanded in a manner which is effective to fill such space.

### Background of the Invention

An assembly, such as but not limited to an automobile, includes several members which form the structure of the assembly. One non-limiting example of such a structural member includes, but is not limited to, a pillar of an automobile.

In order to reduce cost and weight, these structural members are typically hollow. Oftentimes, it is desirable to reinforce these structural members. For example and without limitation, certain areas along a hollow structural member may require additional support. Conventional approaches to support such a member in need of additional support include the insertion of a brace or reinforcement over the outer surface of the member. Other approaches include creating an opening or aperture in the hollow member and inserting the reinforcement member within the hollow portion of the hollow member.

While these conventional methods and approaches do provide additional structural support to a generally hollow member, they suffer from certain drawbacks. For example and without limitation, coupling braces to the exterior of such members undesirably increases both the weight and size of the support member. That is, such exterior support members may interfere with certain allotted packaging constraints.

Furthermore, conventional insertion of supports within the hollow portion of a member generally requires a relatively large aperture to be formed within the member and/or the removal of a relatively large section of the member to allow the additional support to be disposed within the hollow member. These enlarged openings in the frame, while reinforced by the inserted supports, cause the hollow member itself to have a "weak point" which undesirably reduces the rigidity, stiffness, and overall structural integrity of the structural member. Such a reduction in overall rigidity, stiffness, and integrity reduces the protection provided by the structural member. Additionally, forming a large opening within the hollow structural member undesirably increases the likelihood of debris, liquids, or other materials to enter the hollow portion of the member. This may result in any of several undesirable consequences, including, but not limited to, increased noise from loose debris rattling within the hollow portion and/or causing the hollow member to degrade or rust due to the introduction of water or other materials within the hollow portion.

There is therefore a need for an apparatus and a method to selectively provided increased rigidity, stiffness, and integrity to a structural member without creating a large insertion opening in that structural member.

### Summary of the Invention

It is a first non-limiting advantage of the invention to provide a method and an apparatus for selectively rigidizing a structural support member.

It is a second non-limiting advantage of the present invention to provide a method and an apparatus for selectively rigidizing a structural support member in a cost effective and relatively simple manner and without removing a large portion of the structural support member.

It is a third non-limiting advantage of the present invention to provide a structural reinforcement assembly for supporting a member having a cavity and an aperture. Particularly, the assembly comprises an inflation wand which is coupled to a source of material; and a selectively expandable portion which is disposed around and stretched along the inflation wand, effective to permit the selectively expandable portion to be inserted within the cavity via the aperture, wherein the inflation wand selectively communicates the material into the selectively expandable portion.

It is a fourth non-limiting advantage of the present invention to provide a method for structurally reinforcing a member having a cavity. Particularly, the method includes the steps of forming an aperture through the member and into the cavity; providing a selectively expandable balloon assembly; stretching the balloon assembly; inserting the stretched balloon assembly into the cavity through the aperture; and communicating an amount of material into the inserted balloon.

It is a fifth non-limiting advantage of the present invention to provide a method for structurally reinforcing a member. Particularly, the method comprises the steps of providing a selectively expandable hollow balloon member having a nozzle; providing a relatively narrow inflation wand; inserting the inflation wand within the balloon member, wherein the inflation wand abuts the an interior portion of the balloon member on a side opposite to the nozzle; stretching the balloon member along the inflation wand, thereby substantially narrowing the balloon member; forming an aperture within the member; inserting the stretched balloon member within the aperture; and selectively injecting an amount of material within the balloon member, thereby expanding the balloon member within the member.

These and other features, aspects, and advantages of the present invention will become apparent from a reading of the detailed description of the preferred embodiment of the invention and by reference to the following drawings.

### Brief Description of the Drawings

Figure 1 is a partial perspective view of a structural support assembly which is made in accordance with the teachings of the preferred embodiment of the invention;
Figure 1a is a side sectional view of a structural support assembly which is shown in Figure 1 and which is in a stretched position to be inserted into a member;
Figure 2 and 2a are perspective views of the support assembly of Figures 1 and 1a and which depict the insertion of the support assembly into a hollow member;
Figures 3 and 3a are perspective views of the structural support assembly which is shown in Figures 1 and 2 and further showing the selective inflation of the support assembly disposed within the hollow member;
Figure 4 is a perspective view of a gripper portion of the structural support assembly shown in Figures 1 - 3 and which is made in accordance with the teachings of an alternate embodiment of the invention;
Figure 5 is a diagrammatic flow chart depicting the preferred methodology of using the structural support assembly shown in Figures 1 - 4.
Figures 6 and 6a are perspective views of the structural support assembly which show a non-limiting alternative methodology of inflating the support assembly within the hollow member.

### Detailed Description of the Preferred Embodiment of the Invention

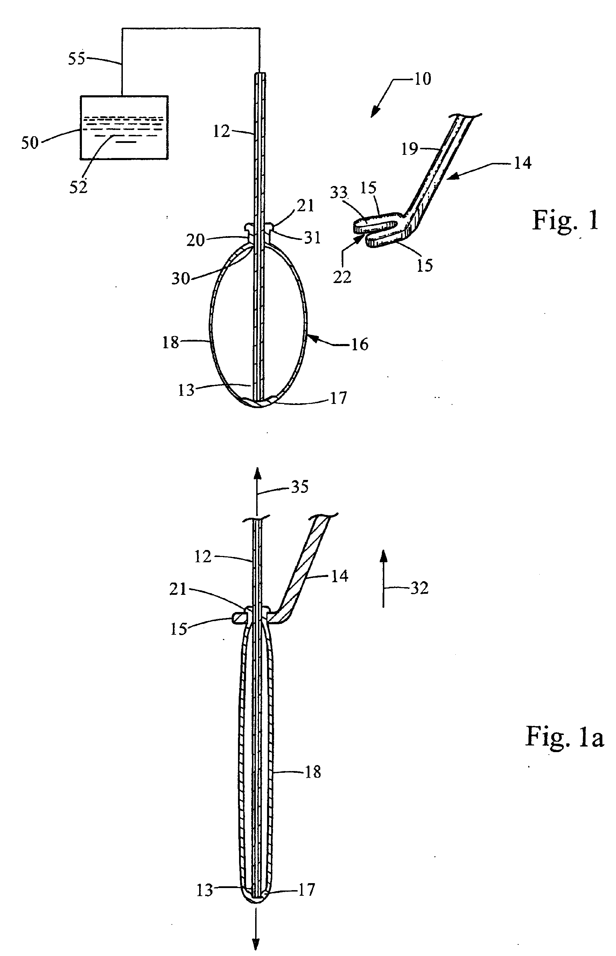

Referring now to Figures 1 and 1a there is shown a structural support assembly 10 which is made in accordance with the teachings of the preferred embodiment of the invention.

Particularly, the structural support assembly 10 includes a selectively inflatable balloon member 16 having a selectively inflatable portion 18 and a valve or nozzle 20 which is communicatively coupled to and/or which may be integrally formed with the selectively inflatable portion 18. Particularly, the selectively inflatable portion 18 includes or forms a cavity 24 which communicates with the opening 30 formed within the nozzle 20. In one non-limiting embodiment of the invention, the selectively inflatable portion 18 is formed from rubber or some other commercially available elastomeric material.

As shown, a portion 17 of inflatable portion 18 is substantially aligned with the longitudinal axis 25 of nozzle 20 (i.e., portion 17 is "below" opening 30). In one non-limiting embodiment of the invention, portion 17 has an increased thickness relative to the remaining portions of inflatable portion 18. For example and without limitation portion 17 may be approximately double the thickness of the remainder of inflatable portion 18.

Structural support assembly 10 further includes a generally hollow inflation tube or wand 12. Particularly, wand 12 is a narrow tube or pipe which is formed from a rigid and strong material, such as a metal. In the preferred embodiment of the invention, wand 12 is fluidly coupled to a source 50 of material 52 through a conduit 55 in a convention manner. That is, wand 12 is coupled to source 50 in a manner which permits material 52 to be forced through conduit 55 by a pump assembly (not shown), into the hollow portion of tube 12, and out of end 13 of tube 12. In the preferred embodiment of the invention, material 52 is a gas, such as carbon dioxide or air, but in other non-limiting embodiments, material 52 may comprise a foam material. That is, in this non-limiting embodiment, an industrial foam, acoustical foam, or structural foam, such as Terocore™ or Betocore™ may be selectively and fluidly passed through wand 12 and out of end 13. As shown in Figures 1 and 1a, the outer diameter of wand 12 is smaller than opening 30 of nozzle 20 and may be selectively inserted through opening 30 and into cavity 24.

In the preferred embodiment of the invention, nozzle 20 comprises a conventionally available valve assembly which permits wand 12 to be inserted into cavity 24 of balloon member 16 (e.g., check valve, needle valve, or flapper valve). In other non-limiting embodiments, nozzle 20 does not include a valve assembly. Additionally, the preferred embodiment of nozzle 20 includes a ridge or lip 21 which has a diameter greater than the outer diameter of nozzle 20. That is, lip 21 is concentric to longitudinal axis 35 and outwardly extends from nozzle 20. In the preferred embodiment of the invention, lip 21 is integrally formed with nozzle 20. In other alternate embodiments, lip 21 may be selectively coupled to nozzle, while in still other alternate embodiments nozzle 20 does not have a lip 21.

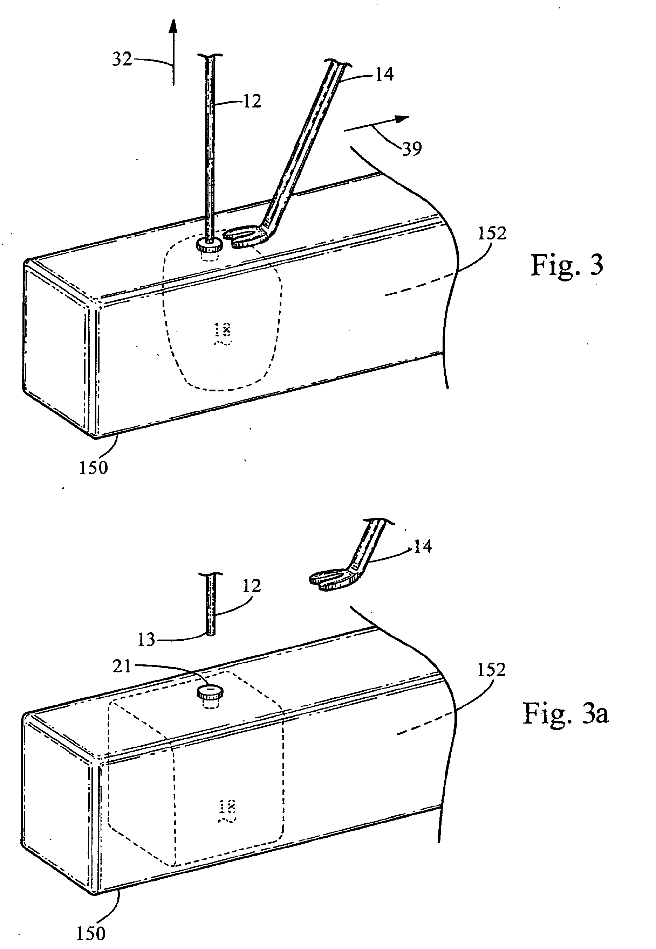

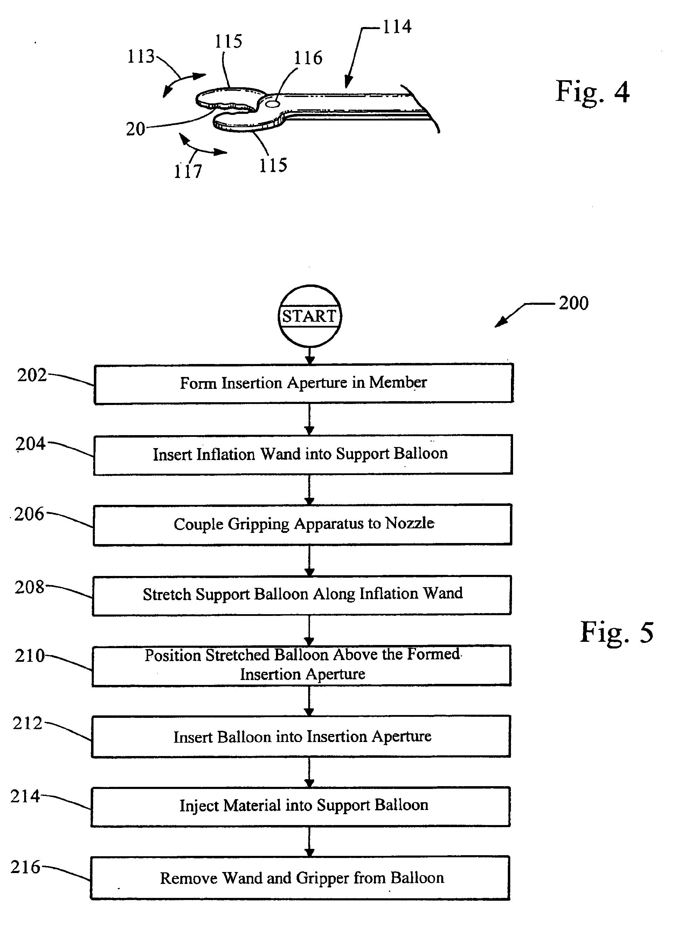

Structural support assembly 10 further includes a gripping member or "gripper" 14. In the preferred embodiment of the invention, gripper 14 includes a pair of outwardly extending flanges or projections 15 coupled to support arm 19. As shown, projections 15 are spaced apart or "forked" to form a generally V-shaped gap 22. As shown, gap 22 formed between projections 15 is shaped and sized to operatively receive nozzle 20. Referring now to Figure 4, there is shown a non-limiting embodiment of the gripper means of structural support assembly 10. Namely, gripper 114, which is functionally the same as gripper 14 shown in Figures 1 - 3. As shown, gripper 114 includes a pair of outwardly extending flanges 115 which are pivotally coupled together at a pivot 116. Flanges 115 are disposed relative to each other and to pivot 116 to permit flanges 115 to move away and toward each other or "open and close" in the direction of arrows 113, 117. It should be appreciated that gripper 114 is sized to operatively receive a nozzle 20 of balloon member 16 between flanges 115, which may be opened and closed around nozzle 20 in a conventional manner.

The preferred methodology 200 of using assembly 10 will now be described by referring to Figures 1, 1a, 2, 2a, and 5. Methodology 200 begins at step 202 in which an aperture 155 having a certain diameter 157 is formed within a member 150 at a location that requires structural reinforcement. It should be appreciated that aperture 155 communicatively connects the generally hollow portion 152 of member 150 with the ambient environment. It should further be appreciated that the diameter 157 of aperture 155 is relatively small in comparison to the size of member 150 (i.e., compared to width 151 and length 153) in order to avoid comprising the structural integrity of member 150 and to limit the size of an entry point for potentially harmful "contaminants" (e.g., water) into portion 152.

In the second step 204 of the methodology 200, inflation wand 12 is inserted into cavity 24 of balloon member 16 through nozzle 20. As shown in Figure 1, wand 12 is inserted within balloon 16 to the point where end 13 of wand 12 abuttingly engages "bottom" portion 17 of expandable portion 18. Step 206 follows step 204 and in this third step 206, gripper 14 is selectively and removably coupled to the nozzle 20 of balloon 16. That is, in this step 206, gripper 14 is positioned relative to balloon 16 whereby nozzle 20 is disposed within gap 22.

In the fourth step 208, at least one of wand 12 and gripper 14 are moved longitudinally relative to each other so that the top surface 33 of gripper flanges 15 abuttingly engage the bottom surface 31 of lip 21 (e.g., wand 12 and gripper 14 are moved in "opposite directions"). This longitudinal movement between wand 12 and gripper 14 in combination with the abutting engagement of the gripper 14 to lip 21 and end 13 with portion 17 causes expandable portion 18 to stretch along the length of wand 12 in the direction of arrow 32. This stretching causes the expandable portion 18 to "narrow" or conform around the relatively small wand 12. It should be appreciated that the expandable portion 18 is stretched until its general size or "diameter" 37 is smaller than the diameter 157 of aperture 155. Step 210 follows step 208 and in this fifth step 210, the structural support assembly 10 having a stretched expandable portion 18 is positioned "above" and substantially aligned with aperture 155.

In the sixth step 212, structural support assembly 10 (i.e., wand 12, gripper 14, and support balloon 16) is moved relative to member 150 in the direction of arrow 34 until gripper 14 abuts to the surface having aperture 155. In this manner, expandable portion 18 is entirely disposed within hollow portion 152 of member 150. In one non-limiting embodiment of the invention, wand 12 may be then selectively moved in the direction of arrow 32 to create a space between end 13 and portion 17.

In the preferred embodiment of the invention, the selectively inflatable portion 18 is inserted into the cavity 152 through the formed hole or opening 155 such that the nozzle 20 is made to protrude from the formed hole or opening 155 into the ambient environment (i.e., lip 21 of nozzle 20 remains outside of member 150).

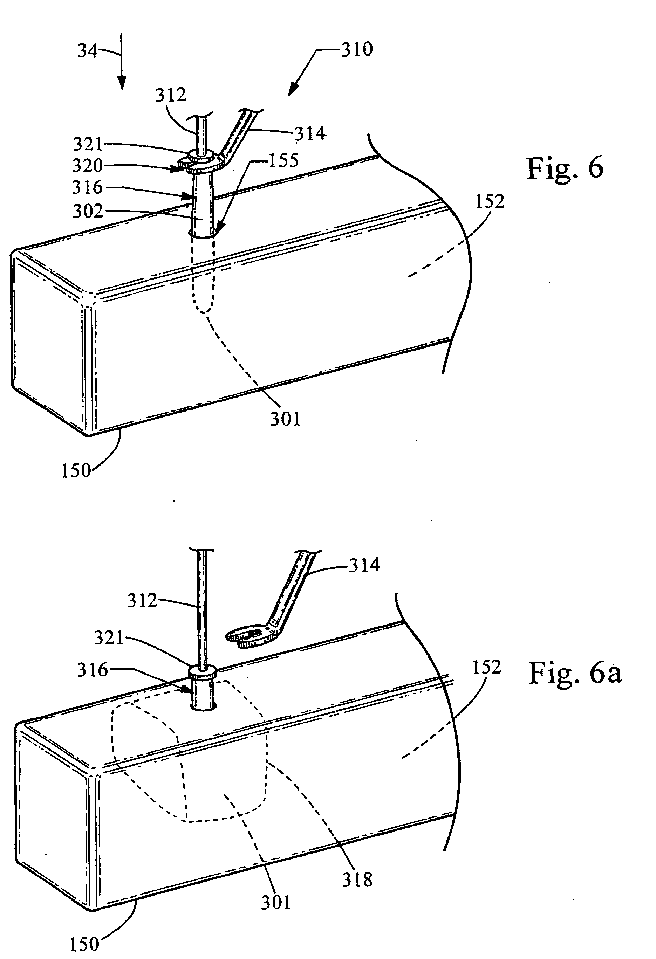

In an alternate non-limiting embodiment of the methodology 200, and is shown in Figures 6 and 6a, structural support assembly 310, which is substantially the same as assembly 10 in substantially all respects, is moved relative to member 150 in the direction of arrow 34 until a first portion 301 of stretched balloon 316 is disposed within aperture 155 while a second portion 302 is disposed external to said member 150. That is, gripper 314 of structural support assembly 310 is disposed a certain distance from the surface of member 150 having aperture 155.

In the seventh step 214 of the methodology 200 of the preferred embodiment of the invention, material 52 (e.g., air or foam) is then communicated into the cavity 24, through the opening 30, by the wand 12, effective to begin to cause the selectively inflatable portion 18 to inflate within the hollow portion 152. In the preferred embodiment of the invention, the selectively inflatable portion 18 uniformly inflates within the hollow portion 152. That is, the term "uniformly inflates" means that each point on the surface of the selectively inflatable portion 18 moves or attempt to move in substantially the same distance within the hollow portion 152.

In other non-limiting embodiments of the invention, portion 18 may be inflated or filled in a non-uniform manner (e.g., a first section of portion 18 is inflated more fully than a second portion 18).

In the most preferred embodiment of the invention, the selectively inflatable portion 18 is inflated to the fullest possible amount without breaking the portion 18.

As shown in Figures 6 and 6a, step 214 may in one non-limiting embodiment comprise injecting material 52 into the second portion 302 of structural support assembly 310 while first portion 301 is still disposed external to member 150. The injection of material 52 causes the second portion 302 (i.e., the portion of selectively expandable portion 318 disposed within member 150) to expand and in this non-limiting embodiment, gripper 314 is retracted or removed from nozzle 320. This expansion of the second portion 302 exerts a downward force upon balloon assembly 316 thereby causing the balloon assembly 316 to slide down wand 312 and into the cavity 152 until lip 321 is seated against the surface of member 150 having aperture 155. In a further non-limiting embodiment, continued injection of material 52 into balloon member 316 may cause lip 321 of nozzle 320 to be pulled into cavity 152, thereby causing the entire balloon assembly 316 to be disposed within cavity 152 of member 150.

In the eighth and last step 216 of the methodology 200 of the preferred embodiment of the invention, the selectively inflatable portion 18 is either fully inflated or is inflated by a desired amount within the hollow portion 152. This step 216 requires the removal of the wand 12 out of the structural balloon 16 (i.e., out of cavity 24 and nozzle 20) and the gripper 14 is moved away or retracted from the nozzle 20 in the direction of arrow 39, thereby leaving the selectively inflatable portion 18 operatively and inflatably disposed within the cavity 14 in a manner which is effective to rigidize and structurally strengthen the member 10.

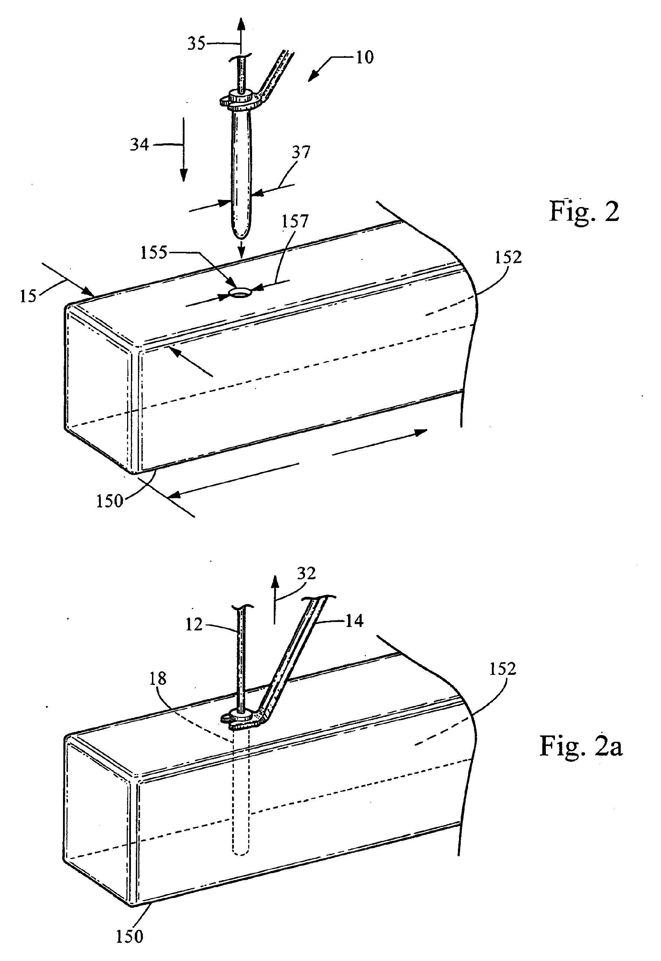

It should be understood that the hollow portion 152 is not limited to the geometrical configuration (i.e., generally rectangular) which is shown in Figures 2 - 3a. Rather, as should be appreciated, the geometrical configuration of hollow portion 152 may be substantially any geometrical configuration. For example and without limitation the applications of the present invention are equally applicable to a substantially round or tubular member. In one non-limiting embodiment, member 150 is a portion of a conventional vehicular box frame or pillar. It should be appreciated that other geometrical configurations or other tubular members or portions may also be supported using the abovementioned embodiments of the invention, and nothing in this description is meant to limit the shape, size, and geometrical configuration of cavities 152 to that which is illustrated within the Figures 2 - 3a.

It should be understood that nothing in the above description is meant to limit the geometrical configurations of the selectively inflatable portions 18, to the shapes which are described and shown in Figures 1 - 3a. Rather, substantially any desired geometrical configuration of an inflatable portion may be substituted in the place of that which is shown in Figures 1 - 3a. Further, it should be understood that the geometrical configurations of the selectively inflatable portions may be designed or produced to administer a predetermined amount of support and/or dampening characteristics.

It is to be understood that the present invention is not limited to the exact construction or method which has been illustrated and described above, but that various modifications may be made without departing from the spirit and the scope of the inventions as are delineated in the following claims. For example and without limitation, the invention is not limited by the number or order of the method steps 202 - 216.

## Claims

1. A structural reinforcement assembly for supporting a member having a cavity and an aperture, said assembly comprising:
an inflation wand which is coupled to a source of material; and
a selectively expandable portion which is disposed around and stretched along said inflation wand, effective to permit said selectively expandable portion to be inserted within said cavity via said aperture, wherein said inflation wand selectively communicates said material into said selectively expandable portion.

2. The structural reinforcement assembly of Claim 1 wherein said selectively expanded portion is formed from an elastomeric material.

3. The structural reinforcement assembly of Claim 1 or Claim 2 further comprising a gripping assembly wherein said gripping assembly is selectively and removably coupled to said selectively expandable portion, effective to stretch said selectively expandable portion along said inflation wand.

4. The structural reinforcement assembly of any one of Claims 1 to 3 wherein said material is air.

5. The structural reinforcement assembly of any one of Claims 1 to 3 wherein said material is carbon dioxide.

6. The structural reinforcement assembly of any one of Claims 1 to 3 wherein said material is foam.

7. A method for structurally reinforcing a member having a cavity, said method comprising the steps of:
forming an aperture through said member and into said cavity;
providing a selectively expandable balloon assembly;
stretching said balloon assembly;
inserting said stretched balloon assembly into said cavity through said aperture; and
communicating an amount of material into said inserted balloon.

8. The method of Claim 7 further comprising the steps of:
providing an inflation wand; and
inserting said inflation wand within said balloon assembly.

9. The method of Claim 8 wherein said step of stretching said balloon assembly further comprises the steps of:
providing gripper means;
selectively coupling said gripper means to a portion of said balloon assembly; and
moving said gripper means and said inflation wand apart from each other.

10. The method of Claim 9 further comprising the steps of:
providing a source of material; and
coupling said source of material to said inflation wand.

11. The method of Claim 10 wherein said material comprises a gas.

12. The method of Claim 10 wherein said material comprises an industrial foam.

13. The method of any one of Claims 7 to 12
wherein said balloon assembly is formed from an elastomeric material.

14. A method for structurally reinforcing a member comprising the steps of:
providing a selectively expandable hollow balloon member having a nozzle;
providing a relatively narrow inflation wand;
inserting said inflation wand within said balloon member, wherein said inflation wand abuts said an interior portion of said balloon member on a side opposite to said nozzle;
stretching said balloon member along said inflation wand, thereby substantially narrowing said balloon member;
forming an aperture within said member;
inserting said stretched balloon member within said aperture; and
selectively injecting an amount of material within said balloon member, thereby expanding said balloon member within said member.

15. The method of claim 14 wherein said nozzle includes a lip portion, said method further comprising the steps of:
providing a gripping assembly;
selectively and removably coupling said gripping assembly to said nozzle, wherein a portion of said gripping assembly abutting engages said lip portion.

16. The method of Claim 14 or Claim 15 wherein said material comprises foam.

17. The method of Claim 14 or Claim 15 wherein said material comprises Terocore™.

18. The method of Claim 14 or Claim 15 wherein said material comprises Betocore™.

19. The method of any one of Claims 14 to 18 wherein said step of inserting said stretched balloon member within said aperture comprises the step of inserting a portion of said balloon into said aperture, wherein said injection of an amount of material is effective to cause said balloon member to slide down said inflation wand.

20. The method of Claim 19 wherein said step of selectively injecting an amount of material within said balloon member, thereby expanding said balloon member within member further comprises the step of causing said nozzle to pass through said aperture.
